# EUROPEAN PATENT APPLICATION

(11) **EP 1 460 802 A1**
(43) Date of publication of application: **22.09.2004**
(21) Application number: 03290676.0
(22) Date of filing: 18.03.2003
(51) Int. Cl.: H04L 12/28

(54) **Communication method and system**

(71) Applicant: Hewlett-Packard Development Company, L.P., Houston, TX 77070 (US)
(72) Inventor: Hyerle, Robert, 38190 Bernin (FR)
(74) Representative: Lloyd, Richard Graham (GB)

(57) **Abstract**

The present invention relates to a communication method and system, and more particularly, to a wireless communication system in which free public Internet access is provided to wireless communication devices via an appropriate wireless communication protocol such as, for example, 802.11b or Bluetooth. A clearing-house server is arranged to manage a pool of money and to distribute that money according to a distribution policy. The distribution policy is intended to compensate owners of various parts of the communication system infrastructure for providing free Internet access. For example, an ISP owner may be compensated for allowing the wireless base station to make its spare bandwidth available for use by members of the public to access the Internet, while concurrently maintaining sufficient bandwidth for its conventional users. Advantageously, the ISP owner is not adversely affected, from a financial perspective, by the wireless base station owner making their spare bandwidth available for use by the public.

## Description

### Field of the Invention

The present invention relates to a communication method and system and, more particularly, to a wireless communication method and system.

### Background to the Invention

There has recently been a rapid growth of wireless communication systems that are based upon the IEEE 802.11b wireless communication standard. In such systems a wireless base station is connected to the Internet via an ISP. A user of an 802.11b-enabled terminal can gain access to the Internet via the 802.11b wireless base station or access point. This combination of an 802.11b wireless base station together with a number of 802.11b enabled terminals is commonly found within the offices of corporations. The users of such 802.1 1b enabled terminals are the employees of that corporation. The bandwidth of the link between the base station and the ISP needs to be increased as the number of employees of a corporation using such terminals increases. Therefore, the IT administrators of such corporations ensure that the bandwidth of the link between the wireless base station and the ISP has a sufficiently large traffic carrying capacity to meet the corporations' needs. It will, therefore, be appreciated that a significant amount of the bandwidth of such a link will be unutilised if the employees are either not using their 802.11b-enabled terminals or are using them for relatively low bandwidth tasks.

Some base station owners or subscribers allow their base stations to be used as public access base stations via which third parties, that is, members of the public, can access the Internet without payment of a fee. Other base station subscribers unknowingly allow their base stations to be used for such public access as a consequence of not using some form of access control such as RADIUS or that provided by the wireless LAN protocol or some other means. In either case the ISP may not be satisfied with this arrangement as providing such public access may greatly increase the amount of traffic carried by the ISP for no increase in revenue for the ISP. The ISP may be particularly unsatisfied if the subscription paid by the owner of the wireless base station for the link to the ISP is unrelated to the amount of usage of that link or to the amount of traffic carried by the link between the ISP server and the wireless base stations.

Furthermore, in the case of unauthorised public access to the Internet having been gained via the wireless base station, if the IT administrators have configured their system so that they are operating with a relatively low bandwidth margin, the use of the available bandwidth by unauthorised users will affect adversely the performance of the system from the perspective of the corporate users or authorised users.

### Summary of Invention

Accordingly, a first aspect of embodiments of the present invention provide a data processing method comprising the steps of receiving a redeemable token containing substantially irrefutable evidence of network access having been granted to a wireless communication device by a base station; and redeeming the token by associating at least a portion of a resource with the grant of the network access.

Advantageously, free access to the Internet can be provided by a base station and a clearing-house ensures that appropriate parties are compensated for that access.

Preferably, embodiments provide a method in which the step of associating comprises the step of allocating the portion of the resource to, or for consumption by, an identifiable party. Suitably, specifically identifiable parties can have a portion of the resource, which is preferably money, allocated to them. The money can remain allocated without being actually transferred. However, preferred embodiments provide a method in which the step of allocating at least a portion of a resource comprises forwarding data to a third party institution representing a transfer of the portion of the resource to the identifiable third party. Therefore, the bank account of the party to whom the money should be transferred is credited.

In preferred embodiments, the identifiable third party is an owner of the base station.

Preferred embodiments provide a method further comprising a step of deriving the substantially irrefutable evidence from data associated with the wireless communication device.

Preferably, embodiments provide a method in which the step of deriving comprises the step of obtaining a unique identifier from the wireless communication device and using at least a portion of that unique identifier to form the substantially irrefutable evidence. Preferred embodiments provide a method in which the step of deriving comprises the step of copying at least a part of predetermined address data used by the wireless communication device to communicate with the base station.

Embodiments can be realised that provide a method in which the step of copying comprises the step of copying at least a part of a MAC address used by the wireless communication device.

A clearing-house server will need to be forwarded proof of network access having been granted to a mobile station. Suitably, embodiments provide a data processing method comprising the step of outputting a redeemable token containing substantially irrefutable evidence of network access having been granted to a wireless communication device by a base station.

Preferably, embodiments provide a method further comprising the step of receiving, from the wireless communication device, unique identification data associated therewith and deriving the substantially irrefutable evidence from the received data.

In some embodiments there is provided a method in which the step of receiving comprises the step of receiving at least a part of predetermined address data used by the wireless communication device in communicating with the base station. Preferably, the predetermined address data is derived from at least part of a MAC address used by the wireless communication device.

Preferred embodiments provide a method in which the step of receiving, from the wireless communication device, data associated therewith comprises the step of receiving authenticated digital data providing evidence of a substantially irrebuttable association with the wireless communication device or an owner thereof.

Preferred embodiments provide a data processing method comprising the step of outputting data from which a redeemable token representing substantially irrefutable evidence of network access having been granted by a base station to a wireless communication device can be derived. Preferably, the output data comprises unique identification data.

The unique data may take many forms. However, preferred embodiments provide a method in which the step of outputting unique identification data comprises the step of outputting at least a portion of predetermined address data used by the wireless communication device in communicating with the base station. Preferably, the predetermined address data is a MAC.

Preferred embodiments provide a method in which the step of outputting comprises the step of outputting data comprising an authenticated digital signature providing substantially irrebuttable evidence of the identity of the wireless communication device.

Embodiments provide a computer program element comprising computer program code means to implement a system or method as described in this specification and a computer program product comprising computer readable storage storing such a computer program element.

### Brief Description of the Drawings

Embodiments of the present invention will now be described, by way of example only, with reference to the accompanying drawings in which:
figure 1 shows a first embodiment of a communication system;
figure 2 shows a second embodiment of a communication system; and
figure 3 shows a third embodiment of a communication system.

### Description of Preferred Embodiments

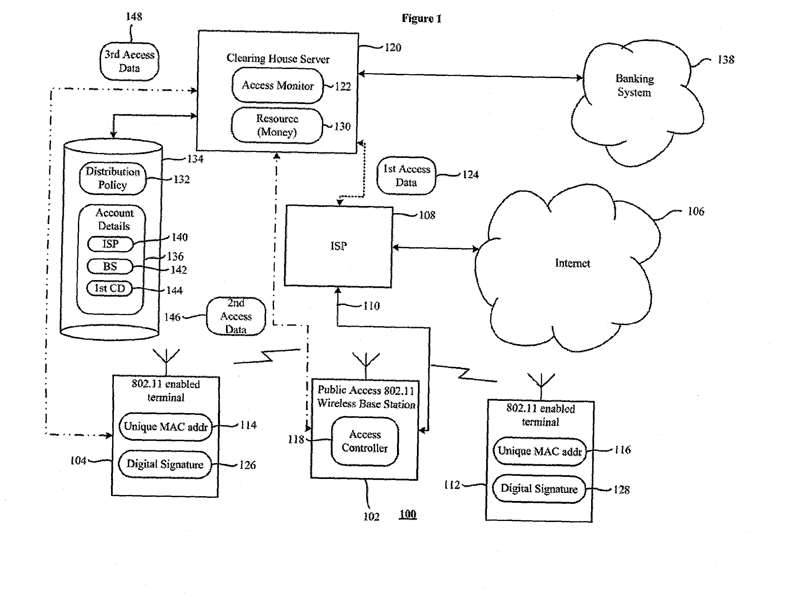

Referring to figure 1, there is shown a communication system 100 according to a first embodiment. The communication system 100 comprises an 802.11b wireless base station 102 for supporting wireless communication with a first 802.11b communication device 104. The first communication device 104 may be an 802.11b enabled computer used by an employee of the owner or subscriber of the 802.11b wireless base station 102. The wireless base station 102 provides access to the Internet 106 via an ISP 108 and a communication channel 110. The communication channel 110 has a fixed maximum bandwidth for carrying traffic between the ISP 108 and the wireless base station 102. A second 802.11b enabled communication device 112 is also afforded access to the Internet 106 via the base station 102, the ISP 108 and the communication channel 110.

The first 104 and second 112 communication devices have respective unique MAC addresses 114 and 116. The unique MAC addresses 114 and 116 are issued by the IEEE (not shown) as is well known within the art.

Preferably, the wireless base station 102 comprises an access controller 118 to control access to the Internet 106 by the first 104 and second 112 communication devices. The access controller 118 may be realised in the form of wired equivalent privacy that is inherent to the 802.11b standard or by some other form of security such as, for example, RADIUS authentication. The access controller 118 can be configured to allow or deny access to the Internet 106 to selected classes of user. Alternatively, or additionally, the access controller can manage access to the Internet by several classes of user. The management of that access may take the form of assignment of respective portions of the bandwidth of the communication channel 110 or the management of access such that one class of user takes priority over another class of user. The classes of user may comprise, for example, corporate users and members of the public.

The communication system 100 also comprises a clearing-house 120. The clearing-house 120 comprises an access monitor 122 for monitoring the grant of Internet access by the wireless base station 102 to the first 104 and second 112 communication devices. In a preferred embodiment, the ISP 108 supplies first access data 124 to the access monitor 122 that provides an indication of the use of the wireless base station 102 by the first 104 and second 112 wireless communication devices. The access data 124 represent a redeemable token that can processed by the access monitor 122 in applying a distribution policy.

Each communication device 104 and 112 comprises a respective private key (not shown). The private keys are used by the first 104 and second 112 communication devices to sign any initial, or subsequent, exchanges with the wireless base station 102. This ensures that the wireless base station 102 can identify the first 104 and second 102 communication devices with an increased degree of confidence. Each communication device 104 and 112 also comprises a respective a digital certificate 126 an 128 derived from the public key associated with the respective private key and issued by a trusted certification authority. Each digital signature 126 and 128 can be verified as being held and presented by its rightful owner or delegate

The access data 124 comprises data identifying communication devices that have been granted access to the Internet by the wireless base station 102. This data may include, for example, the unique MAC addresses 114 and 116 of the communication devices either alone or together with copies of the digital signatures 126 and 128 of those devices. Alternatively, or additionally, the access data may comprise a digital signature or an authenticated digital certificate. The access data 124 comprises at least one of the MAC address, or part thereof, and the digital signature or authenticated digital certificate represent substantially irrefutable evidence of access to the Internet having been granted.

The clearing-house also comprises an associated resource 130. In preferred embodiments, the associated resource represents an amount of money for distribution according to a distribution policy 132 held on an HDD 134 that is accessible by the clearing-house server 120. The distribution policy 132 governs the conditions under which various entities or users are assigned respective portions of the resource or money 130.

The HDD 134 also stores account details 136 of various bank accounts (not shown) to which money can be distributed via the banking system 138.

### First Business Model

Under a business model according to a first embodiment, the ISP 108 owner is compensated for the increased use of the communication channel 110 that follows from the wireless base station 102 being configured to allow free public access to the Internet. The ISP 108 collates the first access data 124 that describes the characteristics of each access or each access session associated with the first 104 or second 112 wireless communication devices. In essence, the ISP monitors or determines the amount of traffic carried by the communication channel 110 attributable to wireless communication devices that have been granted free public access to the Internet 106 by the wireless base station 102.

The ISP 108 identifies those wireless communication devices that have been granted free public access to the Internet 106, in preferred embodiments, using the unique MAC addresses of associated with wireless communication terminals that have an appropriate NIC 802.11b card that entitles them to free public access to the Internet 106, preferably, together with a digital signature.

The ISP 108 forwards the collated first access data 124 to the clearing-house server 120 where the access monitor 122 allocates or assigns a portion of the money 130 according to the distribution policy 132.

Under this business model, the distribution policy 132 indicates that the ISP should be compensated for free access to the Internet being provided by the wireless base station 102. Suitably, the access monitor 122 retrieves the ISP account details 140 from the account details file 136. Using the ISP account details 140, the access monitor 122 instigates a transfer of an appropriate portion of the money 130 to the bank account of the ISP owner via the banking system 138. The account details file 136 also contains, for the purpose of illustration, bank account details 142 of the base station owner and bank account details 144 of the first communication device owner.

### Second Business Model

Under a business model according to a second embodiment, the owner of the wireless base station 102, either alone or in conjunction with another party, is compensated for allowing the wireless base station 102 to be used to gain free public access to the Internet 106. The access controller 118 generates second access data 146, which identifies those wireless communication devices that are entitled to free public access by virtue of having paid an appropriate subscription or purchased an appropriate NIC or MAC address. The second access data 146 are transmitted to the access monitor 122 of the clearing-house server 120. The second access data 146 may be transmitted to the clearing-house server 120 as and when access to the Internet 106 is granted to appropriate wireless communication devices. Alternatively, or additionally, the second access data 146 may represent a record of the accesses granted to one wireless communication device, or to a number of wireless communication devices, over a period of time.

The access monitor 122, upon receiving the second access data 146, retrieves the account details 142 corresponding to the owner of the wireless base station 102 and designates a portion of the money 130 to be transferred to the account of that owner via the banking system 138. Having made that apportionment, the access monitor 122 instigates transfer of the apportionment to the owner of the wireless base station 102.

Therefore, it can be appreciated that the wireless base station owner is compensated for allowing the base station 102 to be used to provide free public access to the Internet 106 to appropriately enabled wireless communication devices.

It will be appreciated that embodiments can be realised that encompass the combination of the business model according to the first embodiment and the business model according to a second embodiment, that is, embodiments can be realised in which both the ISP owner and the base station owner are compensated for granting access to the Internet 106 to appropriately enabled wireless communication devices.

Furthermore, the rates at which the ISP owner and the owner of the wireless base station are compensated may be identical or respective criteria may be applied to achieve differential compensation according to the distribution policy 132.

### Third Business Model

A third embodiment of a business model according to the present invention can be realised in which the owner of an appropriately enabled wireless communication device is compensated as a consequence of being afforded free public access to the Internet 106 without having to have procured or used an appropriate NIC or MAC address. Under such an embodiment, third access data 148 is collated and transmitted to the access monitor 122 of the clearing-house server 120. The access monitor 122, upon processing the third access data 148, retrieves the bank account details 144 that correspond to the owner of the wireless communication device and ensures that an appropriate portion of the money 130 is paid into that account via the banking system 138.

Under this embodiment, it can be appreciated that the owner of the first communication device 104 is compensated for having gained free public access to the Internet 106 without having to have relied upon a subscription or purchase of a suitable NIC having a special MAC address.

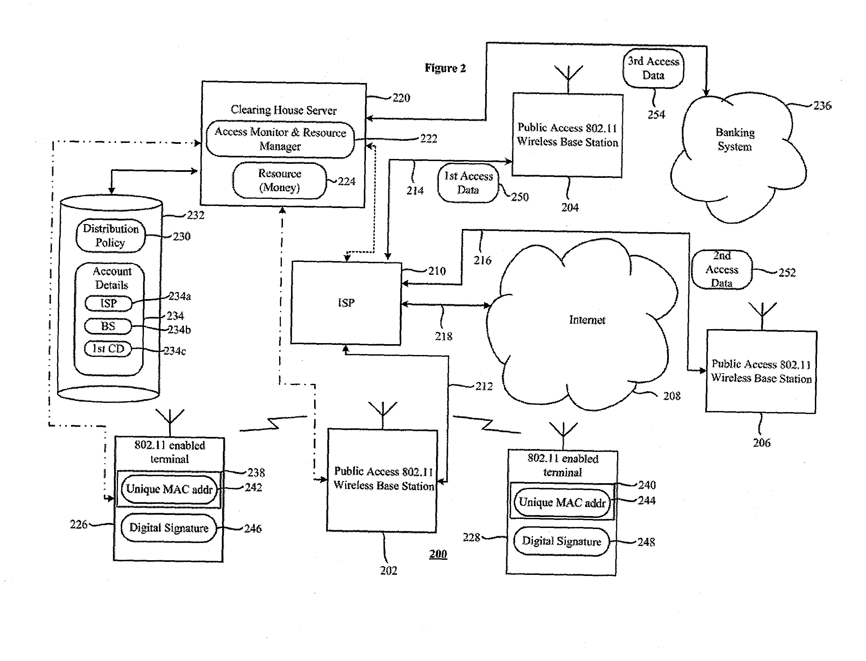

Figure 2 shows a second embodiment of a communication system 200. The communication system 200 comprises a number of public access wireless base stations 202 to 206 that have a common owner such as, for example, a company or individual; the business of the company or individual being to provide public access to the Internet 208. The wireless base stations 202 to 206 are connected to an ISP 210 via respective leased lines 212 to 216. The leased lines 212 to 216 have respective bandwidths, or maximum traffic carrying capacities, and are leased for use by the wireless base stations 202 to 206.

The ISP 210 provides a channel 218 for exchanging information with servers (not shown) connected to the Internet 208.

The communication system 200 also comprises a clearing-house server 220 having an access monitor and resource manager 222 for monitoring use of the Internet by wireless communication terminals such as, for example, the two wireless communication terminals 226 and 228 illustrated. The resource manager 222 is arranged to distribute an associated resource 224, that is, money or money's worth, according to a distribution policy 230. The distribution policy is stored on an HDD 232 that is accessible by the clearing-house server 220. The HDD 232 also comprises bank account details 234 that represent the bank account details of various parties who may benefit under the distribution policy 230. The clearing-house server 220 has access to the banking system 236 via which the money 224 or appropriate portions of that money 224, determined by the distribution policy 230, can be transferred to the bank accounts of the parties. For illustrative purposes only, figure 2 shows the account details 234a, 234b and 234c of the ISP owner, the base station owner and the wireless communication device owner respectively.

To take advantage of the offer of free access to the Internet 208 offered by the wireless base stations 202 to 206, the wireless communication devices 226 and 228 must have an 802.11b NIC 238 and 240 that have respective unique MAC addresses 242 and 244 issued by the IEEE. The unique MAC addresses will be capable of being distinguished from conventional MAC addresses such that the unique MAC addresses will be granted free Internet access by participating base stations whereas conventional MAC addresses will not knowingly be granted such access. According to one embodiment, a portion of the price paid to obtain the NICs 238 and 240 or the unique MAC addresses 242 and 244 is directed, via the banking system 236, to form part of the pool of money 224 available for distribution by the resource manager 222.

The wireless communication devices 226 and 228 optionally comprise respective digital signatures 246 and 248 that can be used to authenticate the wireless communication terminals 226 to 228. The authentication may be undertaken by any of the wireless base stations 202 to 206, the ISP 210 or the clearing-house server 220.

Using the communication system 200 illustrated in figure 2, a fourth embodiment of a business model can be realised in which the owner of the wireless base stations is compensated according to the use of those base stations 202 to 206 by wireless communication devices, such as devices 226 and 228, to gain access to the Internet 208. The compensation is in recognition of the owner of the wireless base stations 202 to 206 having borne the infrastructure costs associated with providing the wireless base stations 202 to 206 and the leased lines 212 to 216. Under this business model, the wireless base stations 202 to 206 send respective access data 250 to 254 to the clearing-house server 220, where that data 250 to 254 is processed by the access monitor 222. The access monitor 222 applies the distribution policy 230 using the access data 250 to 254 and distributes appropriate portions of the pool of money 224, via the banking system 236, to the accounts of those identified as beneficiaries under that policy 230.

The access data 250 to 254 transmitted to the clearing-house server 220 may be transmitted as and when access has been granted to a wireless communication terminal. Alternatively, the wireless base stations may accumulate access data over a predetermined period of time and forward the accumulated access data at predetermined times or at predetermined intervals. The predetermined intervals may be, for example, at the end of every hour, every day, every week or every month as is convenient. Furthermore, the transfer of the collated access data may be arranged to coincide with predetermined levels of activity or use of the Internet 208. At peak traffic times, the wireless base stations may reserve the bandwidth of the leased lines 212 to 216 for granting access to the Internet rather than for transferring the collated access data. Therefore, during off peak traffic carrying times, the collated access data may be transferred via the leased lines 212 to 216 without adversely affecting the availability of the bandwidth of those lines for use in providing access to the Internet 208 to the wireless communication devices 226 to 228.

As with the business model embodiments described with reference to figure 1, it is possible for the ISP 210 and the owners of the wireless communication devices 226 and 228 to benefit jointly or severally from the pool of money 224 if the distribution policy 230 is modified accordingly.

An alternative to the wireless base stations collating and forwarding the access data to the clearing-house server 222 is to arrange for the ISP 210 to collate that access data 250 to 254 and to forward the collated access data to the clearing-house server 220 for processing by the access monitor 222.

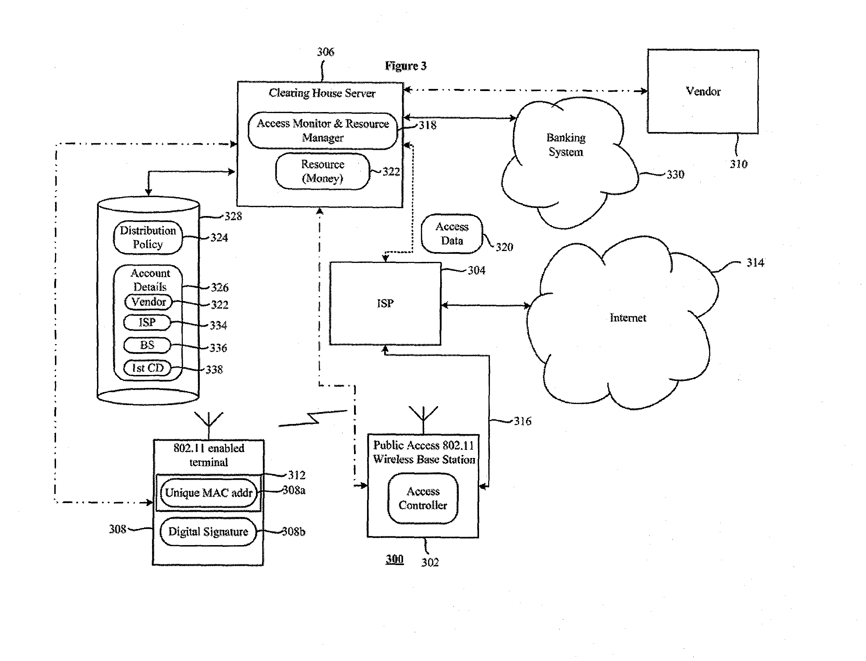

Figure 3 shows a third embodiment of a communication system 300. The communication system 300 comprises a wireless base station 302, an ISP 304, a clearing-house server 306, a wireless communication device 308 and an equipment vendor 310. The ISP 304 is connected to the Internet 314. A leased line 316 is used to connect the wireless base station 302 to the ISP 304.

The equipment vendor 310 may sell, for example, base stations used to provide wireless access to the Internet 314 such as base station 302. The equipment vendor may sell other equipment or infrastructure used to implement the system 300.

As described in the above embodiments, the wireless communication device 308 gains access to the Internet 314 via the wireless base station 302 and the ISP 304. That access is granted upon the wireless communication device 308 having an approved MAC address 308a, or other identifier, such as a digital signature 308b, or combination thereof, that entitles the wireless communication device 308 to free public Internet access.

The clearing-house server 306 comprises an access monitor 318 that monitors Internet access granted to the wireless communication device 308. In preferred embodiments, the ISP 304 forwards access data 320 to the clearing-house server 306. The access data 320 contains information relating to the Internet access granted to the communication terminal 308. That information includes the unique identifier, or MAC address, associated with the wireless communication device 308 and information relating to the nature of the access such as, for example, the amount of traffic exchanged between the wireless communication device 308 and the Internet 314 or the duration for which access was granted. Preferably, the unique identifier may also comprise the digital signature 308b of the wireless communication device.

The access monitor 318 uses the access data 320 to distribute appropriate portions of a fund of money 322 according to a distribution policy 324.

Under the distribution policy 324, the equipment vendor 310 is arranged, using account details 326 stored on an HDD 328 and the banking system 330, to receive an appropriate portion of the pool of money 322. For the purposes of illustration only, the account details 326 are shown as including, in addition to equipment vendor account details 332, the ISP account details 334, the base station owner account details 336 and the account details 338 of the owner of the communication device.

The compensation paid to the equipment vendor 310 may be due to that vendor having sold equipment at cost or at a reduced profit margin as compared to normal. Using the third embodiment of the communication system 300, it is possible to compensate also the owner of the ISP 304, the owner of the wireless base station 302 and the owner of the communication device 308 by appropriately modifying the distribution policy 324 as described above in relation to the first 100 and second 200 embodiments of the communication system.

In the above embodiments, the funds forming part of the resources can be raised in a number of ways. For example, the users of the wireless communication devices may, upon application for their unique MAC addresses, pay an associated regular premium, or one off premium, to the IEEE for MAC addressees that have been set aside for use in embodiments of the present invention. Part or all of the premium paid by the users of the wireless communication devices is diverted, via the banking system 138, to the clearing-house servers to form part of the funds available for distribution.

Rather than the IEEE being the responsible issuing authority of the unique MAC addresses that can be used to obtain free Internet access, embodiments can be realised in which a different issuing authority issues such MAC addresses or other identifiers. For example, a company may be established whose business is to sell such MAC addresses or to sell equipment using such MAC addresses. Under such an embodiment, the company purchases MAC addresses from the IEEE and sells those purchased addresses as it sees fit, at a premium or discount, and is rewarded under a distribution policy as the policy devisors see fit.

Although the above embodiments have been described with reference to the resource being money that is distributed according to the distribution policy, embodiments of the present invention are not limited to such an arrangement. Embodiments can be realised in which the resource corresponds to monies worth, rather than money, in the form of, for example, credits or discounts, for distribution according to the distribution policy. For example, if the wireless base station 102 carries public access traffic, which will use more of the bandwidth of the communication channel 110, then the owner or subscriber of the wireless base station is compensated for that use. The compensation may take the form of a reduced subscription or line rental or rebate. The phrase "free public access" encompasses the situation in which a third party may use the equipment of another to access the Internet, with there being no legal or financial nexus between the third party and the other party or in the absence of any financial transaction or arrangements being concluded between the parties.

Although the above embodiments have been described with reference to a portion of the price paid for a NIC or unique MAC address forming part of the fund or pool of money available for distribution to various third parties, embodiments of the present invention are not limited to such an arrangement. Embodiments can be realised in which the owners of the wireless communication devices who desire public access to the Internet via the wireless base stations contribute to the pool of money 224 by way of a one-off payment or a regular subscription in exchange for being granted such access. Under such an arrangement the wireless communication devices may register a unique identifier with the clearing-house server. The unique identifier can be used by the clearing-house server in response to requests from the ISP or wireless base stations for an indication of whether or not a wireless communication device, having supplied its unique identifier, is entitled to be granted access to the Internet. In preferred embodiments, the unique identifiers comprise the unique MAC addresses issued to the wireless communication devices. In other embodiments, the unique identifier comprises some other form of authentication such as, for example, an authenticated digital certificate or a digital signature.

Although the some of the above embodiments have been described and illustrated with reference to using digital signatures as proof of identity, embodiments can also be realised that use digital certificates as proof of identity.

It will be appreciated that the degree of probity of the substantially irrefutable evidence may be thought to vary with the number of bits of encryption that are used to produce the digital signatures and digital certificates used by embodiments of the present invention. In effect, a digital certificate or digital signature that uses 40-bit encryption may be thought to be less irrefutable than a digital certificate or digital signature that uses 128-bit encryption.

Although the above embodiments schematically illustrate the access data as being transferred directly to the clearing-house server, this is for illustrative purposes only. It will be appreciated by those skilled in the art that the access data, in practice, would be routed to the clearing-house server via an ISP or the Internet.

Furthermore, other wireless communication protocols such as, for example, Bluetooth, may be used in addition to, or instead of, the 802.11b protocol to realise embodiments of the present invention.

It will be appreciated by one skilled in the art that the access data represent redeemable tokens that can be used to obtain compensation for having supported or accommodated free Internet access via the wireless base stations. Furthermore, the access data comprises at least one of the MAC address, or part thereof, and the digital signature or authenticated digital certificate, which could then be used to represent substantially irrefutable evidence of access to the Internet having been granted.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing method comprising the steps of receiving a redeemable token containing substantially irrefutable evidence of network access having been granted to a wireless communication device by a base station; and redeeming the token by associating at least a portion of a resource with the grant of the network access.

2. A method as claimed in claim 1 in which the step of associating comprises the step of allocating the portion of the resource to, or for consumption by, an identifiable party.

3. A method as claimed in claim 2 in which the step of allocating at least a portion of a resource comprises forwarding data, to a third party institution, representing a transfer of the portion of the resource to the identifiable third party.

4. A method as claimed in claim 3 in which the identifiable third party is an owner of the base station.

5. A method as claimed in any preceding claim, further comprising a step of deriving the substantially irrefutable evidence from data associated with the wireless communication device.

6. A method as claimed in claim 5 in which the step of deriving comprises the step of obtaining a unique identifier from the wireless communication device and using at least a portion of that unique identifier to form the substantially irrefutable evidence.

7. A method as claimed in claim 5 in which the step of deriving comprises the step of copying at least a part of predetermined address data used by the wireless communication device to communicate with the base station.

8. A method as claimed in claim 7 in which the step of copying comprises the step of copying at least a part of a MAC address used by the wireless communication device.

9. A data processing method comprising the step of outputting a redeemable token containing substantially irrefutable evidence of network access having been granted to a wireless communication device by a base station.

10. A method as claimed in claim 9, further comprising the step of receiving from the wireless communication device unique identification data associated therewith and deriving the substantially irrefutable evidence from the received data.

11. A method as claimed in claim 10 in which the step of receiving comprises the step of receiving at least a part of predetermined address data used by the wireless communication device in communicating with the base station.

12. A method as claimed in claim 11 in which the predetermined address data is derived from at least part of a MAC address used by the wireless communication device.

13. A method as claimed in any of claims 10 to 12 in which the step of receiving from the wireless communication device data associated therewith comprises the step of receiving authenticated digital data providing evidence of an substantially irrebuttable association with the wireless communication device or an owner thereof.

14. A data processing method comprising the steps of outputting data from which a redeemable token representing substantially irrefutable evidence of network access having been granted by a base station to a wireless communication device can be derived.

15. A method as claimed in claim 14 in which the step of outputting comprises the step of outputting unique identification data.

16. A method as claimed in claim 15, in which the step of outputting unique identification data comprises the step of outputting at least a portion of predetermined address data used by the wireless communication device in communicating with a base station.

17. A method as claimed in any of claims 14 and 16 in which the step of outputting comprises the step of outputting data comprising an authenticated digital signature providing substantially irrebuttable evidence of the identity of the wireless communication device.

18. A system comprising means to implement a method as claimed in any preceding claim.

19. A computer program element comprising computer program code means to implement a system or method as claimed in any preceding claim.

20. A computer program product comprising computer readable storage storing a computer program element as claimed in claim 19.
